# EUROPEAN PATENT SPECIFICATION

(11) **EP 2 553 977 B1**
(45) Date of publication and mention of the grant of the patent: **08.03.2017**
(21) Application number: 10718334.5
(22) Date of filing: 01.04.2010
(51) Int. Cl.: H04W 36/32, H04W 36/00

(54) **USER EQUIPMENT, RADIO BASE STATION AND METHODS THEREIN FOR DETERMINING MOBILITY TRIGGER**
BENUTZERGERÄT, FUNKBASISSTATION UND VERFAHREN DARIN ZUR BESTIMMUNG DER MOBILITÄTSAUSLÖSERS
EQUIPEMENT UTILISATEUR, STATION DE BASE RADIO ET PROCÉDÉS ASSOCIÉS POUR DÉTERMINER UN DÉCLENCHEUR DE MOBILITÉ

(43) Date of publication of application: 06.02.2013
(73) Proprietor: Telefonaktiebolaget LM Ericsson (publ), 164 83 Stockholm (SE)
(72) Inventor: DIMOU, Konstantinos, SE-113 41 Stockholm (SE); YANG, Yu, SE-170 72 Solna (SE); KAZMI, Muhammad, SE-167 39 Bromma (SE)
(74) Representative: Rees, Simon John Lewis
(86) International application number: PCT/SE2010/050369
(87) International publication number: WO 2011/123006

(56) References cited:
- EP-A1- 2 048 892
- US-A1- 2006 205 406
- ZTE ET AL: "Consideration of Cell Type and UE mobility state in MRO", 3GPP DRAFT; R3-100191, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Valencia, Spain; 20100118, 15 January 2010 (2010-01-15), XP050424054, [retrieved on 2010-01-15]
- JANG-SUB KIM ET AL: "Handoff Triggering and Network Selection Algorithms for Load-Balancing Handoff in CDMA-WLAN Integrated Networks", EURASIP JOURNAL ON WIRELESS COMMUNICATIONS AND NETWORKING, vol. 2008, 1 January 2008 (2008-01-01), pages 1-14, XP055153956, ISSN: 1687-1472, DOI: 10.1016/0166-5316(93)90035-S

## Description

### TECHNICAL FIELD

The invention relates to a user equipment, a method therein, a radio base station and a method therein. In particular, the invention relates to mobility management in a radio communications network.

### BACKGROUND

In later versions of cellular systems of today, such as Long Term Evolution (LTE) systems, deployments with several layers are becoming more and more common such as in the network deployments, wherein certain areas coverage from macro layer deployment overlaps with areas covered by micro and pico/femto network deployments. These scenarios are expected to become more and more popular as a direct consequence of the proliferation of pico, femto and home Radio base stations, also known as home evolved NodeB (eNB). In such a network deployment, mobility management is becoming a challenging task, since it is quite important that a right mobility trigger is used when a user equipment is moving towards different types of cells, e.g. different mobility triggers may be used when the user equipment moves towards a macro cell than in the case when the user equipment moves towards a femto cell. The impact from the wrong setting of mobility triggers in these networks might be more severe than in normal networks featuring uniform deployment of cells.

For example, consider the case where a user equipment is moving from a macro cell towards a femto cell. The user equipment speed is 30 km/h. Instead of using the mobility triggers for the pair serving-target cells which correspond to the pair macro-femto cell, then the mobility triggers which correspond to the pair macro-macro cell are used. The mobility triggers to be used in the pair serving-target cells of sizes large-small should involve rather bigger value of signal hysteresis, handover hysteresis, and rather shorter value of time hysteresis, Time-To-Trigger (TTT). Assume that the user equipment instead of using the appropriate handover triggers applies the handover triggers for the pair serving-target cell of sizes large-large. In this case, the handover (HO) hysterisis tends to be smaller than the one for the pair serving-target cell of sizes large-large. The TTT is larger though in this case than in the case of cell sizes large-short. As a result of this longer TTT, the handover decision might be delayed. This means that the communication with the serving station is very likely experiencing higher loss rate, higher probability of Radio Link Failure and in addition this communication interferes with the femto eNB in uplink and the user equipments served by the femto eNB in downlink. This interference however created in this case is more severe than in typical macro network deployments, due to the smaller size of the femto cells.

The benefit of combining two handover trigger mechanisms, one for the scenario when user is in the microcellular plane or coverage layer, the other when the user is in the macro-cellular plane, has been discussed in the prior art literature; G. P. Pollini, "Trends in Handover Design," IEEE Communications Magazine, March 1996. pp. 82-90.

The first handover trigger comprising of small hysteresis margin with long averaging is tuned for the macro-cellular coverage layer, the second handover trigger comprising of large hysteresis margin with short averaging time for the microcellular plane. Thus, in the prior art literature the basic idea of adapting the handover trigger as a function of the cell type has been disclosed and the benefit of adaptation is discussed. In order for this adaptation to function the user equipment will have to be provided 2 or more handover triggers or mobility related parameters.

It is known in prior art that serving cell can signal the cell identifiers of home base stations operating in an area. It is also known that the home base station signals implicitly its type e.g. home base station name. After acquiring the cell identity of the base station during the cell search, the user equipment can thus identify whether a particular base station is home base station or not. However, prior art systems may select the wrong mobility trigger based on type of the cell, resulting in a poor mobility performance of a user equipment in the systems.

EP 2 048 892 A1 discloses a method for reducing the number of handovers in a telecommunications system.

ZTE et. al., "Consideration of cell type and UE mobility state in MRO", 3GPP Draft, R3-100191, 3rd Generation Partnership Project (3GPP), 15 January 2010, describes a proposal for improving mobility robustness optimization (MRO) in LTE.

US 2006/0205406 describes apparatus and methods for adaptively determining a handover measurement interval.

### SUMMARY

It is an object with embodiments herein to provide a mechanism that enhances the mobility performance of a user equipment in a radio communications network.

According to an aspect of the invention the object is achieved by providing a method in the user equipment. The method is for enabling a cell change of a connection of the user equipment from a first cell to a second cell in the radio communications network, wherein the user equipment is provided with two or more mobility triggers. The user equipment is served by the first cell.

The user equipment obtains a first cell size of the first cell and also a second cell size of the second cell. The user equipment then determines which of the two or more mobility triggers to use based on at least the first cell size and/or the second cell size, wherein the determined mobility trigger is used to determine whether a cell change is to be performed.

Thus, the cell change is based on the cell sizes leading to an improved mobility performance of the network compared to prior art networks.

According to another aspect of the invention the object is achieved by providing a user equipment arranged to perform the cell change of the connection of the user equipment from the first cell to the second cell in the radio communications network. The user equipment is further arranged to be served by the first cell and comprises an obtaining circuit. The obtaining circuit is configured to obtain a first cell size of the first cell and a second cell size of the second cell. Furthermore, the user equipment comprises a determining circuit configured to determine the mobility trigger to use based on at least the first cell size and/or the second cell size. The mobility trigger is used to determine whether a cell change is to be performed.

According to another aspect of the invention the object is achieved by providing a method in the radio access network node. The method is for handling the cell change of the connection of the user equipment served by the first cell in the radio communications network, wherein the user equipment is provided with two or more mobility triggers. As stated above, the cell change is from the first cell to the second cell in the radio communications network. The radio access network node signals an indication of the first cell size of the first cell and/or the second cell size of the second cell to the user equipment. The cell sizes are to be used by the user equipment to determine which of the two or more mobility triggers to use for performing cell change, wherein the determined mobility trigger is used to determine whether a cell change is to be performed.

According to another aspect of the invention the object is achieved by providing a radio access network node. The radio access network node is arranged to handle the cell change of the connection of the user equipment served by the first cell in the radio communications network, wherein the user equipment is provided with two or more mobility triggers. The cell change is from the first cell to the second cell in the radio communications network. The radio access network node comprises a signaling circuit configured to signal the indication of the first cell size of the first cell and/or the second cell size of the second cell to the user equipment. The cell sizes are to be used by the user equipment to determine which of the two or more mobility triggers to use for performing cell change, wherein the determined mobility trigger is used to determine whether a cell change is to be performed.

Embodiments herein disclose the obtaining or acquisition of cell size information by the user equipment in the radio communications network. The cell size information is used when determining mobility trigger to use. There are mainly two sets of methods for obtaining the cell size information:
In one set of embodiments the user equipment obtains the cell size information via explicit or implicit signaling over the radio interface.

In another set of embodiment the user equipment obtains the cell size information from the pre-defined mapping table which maps the cell identifier to the cell size information; this scheme is suitable when there is no explicit neighbor cell list. The different methods require different amount of radio capacities and also enables different accuracy of the cell sizes.

The user equipment determines the mobility triggers to use based on the cell sizes and thereby the mobility related parameters are adapted based on size instead of type. Thus, a mechanism is provided to obtain information of the cell size for both serving and target cells in a way that not too much signaling overhead is generated and that leads to the mobility performance of the user equipment improves as the correct mobility trigger will be used. Here, some embodiments focus on the mobility triggers to be used by the user equipment so as to trigger the detection of a "handover event" but also on cell reselection when being in idle mode.

### BRIEF DESCRIPTION OF THE DRAWINGS

Embodiments will now be described in more detail in relation to the enclosed drawings, in which:
- Fig. 1: is a schematic overview depicting a heterogeneous radio communications network,
- Fig. 2: is a schematic overview depicting a radio communications network,
- Fig. 3: is a schematic flowchart and signalling scheme in a radio communications network,
- Fig. 4: is a schematic flowchart depicting a method in a user equipment,
- Figs 5a-5b: illustrate the signaled neighbor cell list, which list mapping cell identifiers to the corresponding cell size identifiers,'
- Fig. 6: is a schematic flowchart depicting a method for determining cell size in a user equipment,
- Fig. 7: is a schematic flowchart depicting a method for determining cell size in a user equipment,
- Fig. 8: is a schematic flowchart depicting a method in a user equipment in a radio communications network,
- Fig. 9: is a schematic block diagram depicting a user equipment,
- Fig. 10: is a schematic flowchart depicting a method in a radio access network node, and
- Fig. 11: is a schematic block diagram depicting a radio access network node.

### DETAILED DESCRIPTION

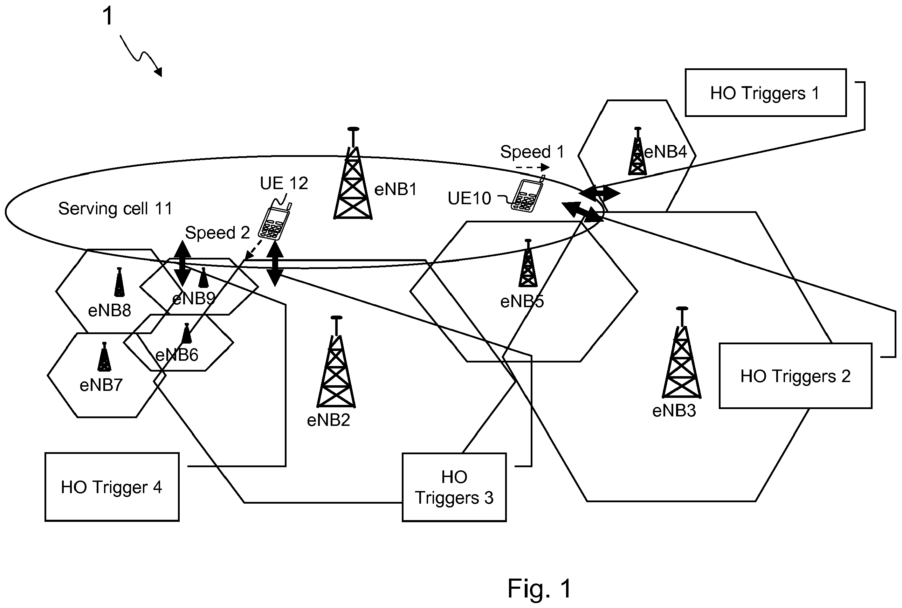

**Fig. 1** is a schematic overview depicting a heterogeneous network. Fig. 1 discloses an example wherein **a first user equipment 10** served in **a serving cell 11** is moving towards a cell border of the serving cell 11 with a speed 1 in a radio communications network. Speed 1 may be above 10-15 km/h. The radio communications network is exemplified as a heterogeneous network comprising macro cells served by radio access network nodes, such as radio base stations **eNB1-eNB3,** and micro or pico or femto cells served by radio base stations **eNB4-eNB9.** As the first user equipment 10 moves towards the macro cell of eNB 3 and micro cell of eNB 4 different mobility triggers, in this case handover triggers, may be used; handover (HO) trigger 1 for the handover to the micro cell of eNB 4 and HO trigger 2 for the handover to the macro cell of eNB 3. Similar applies to **a second user equipment 12;** as the second user equipment 12 moves towards the macro cell of eNB 2 with a speed 2, being > 10-15 km/h, and femto cell of eNB 9 different handover triggers are used; handover (HO) trigger 3 for the handover to the macro cell of eNB 2 and HO trigger 4 for the handover to the femto cell of eNB 9. The handover triggers 1-4 are different from each other. Appropriate handover triggers to be used on the different pairs of distance to serving eNB, and hence due to target cell size and not the type of cell.

Simulation results show that the careful choice of mobility triggers in different pairs of cell sizes, for the pair of serving-target cell, leads to substantial performance improvement e.g. in terms of reduction in handover failure rate, reduction in time the user equipment is not connected to the best cell etc. The same radio base station type, e.g. home base station, may be serving cells of different sizes, thus, selection of mobility trigger based on type of cell might result in a wrongful selection of mobility trigger. Also, different radio base station types may have the same cell size. For example a wide area radio base station and home base station may have cell size of 500 m. Hence the same set of mobility triggers is not appropriate for all the cells belonging to the same radio base station type.

Therefore, embodiments herein provide the adaptation of at least sub-set of handover related parameters, namely time to trigger (TTT) and signal hysteresis, and may be defined as a function of cell sizes of the serving and of the target cell. The above two parameters, TTT and signal hysteresis, as well as additional mobility related parameters, such as Layer 3 filtering co-efficient and measurement bandwidth, are configured by the eNB 1 in Evolved Universal Terrestrial Radio Access Network, E-UTRAN. The user equipment 10 in the serving cell 11 uses the configured parameters to evaluate the configured events. A triggering event is reported by the user equipment 10 to the network node, i.e. eNB 1 in Long Term Evolution (LTE) system, which then takes an appropriate decision, such as handover initiation. In case of cell reselection, which is performed by the user equipment 10 in idle mode, the target cell is autonomously selected by the user equipment 10. However the cell reselection is implicitly controlled by the network by parameters, which in principle are similar to those used for handovers such as signal hysteresis, time hysteresis etc.

Although examples are discussed for E-UTRAN, the examples are applicable to any mobile communication system in which the user equipment 10 utilizes these triggers, i.e. signal and time hysteresis, for performing handover or cell reselection evaluation.

This is a direct consequence of the fact that the received signal strength (RSS) variations are more abrupt in small cells, than in larger ones. Namely, the level of variation depends on the distance of the user equipment 10 to the serving radio base station.

Hence, even within the same cell, it might happen that the set of mobility triggers to be used when the user equipment 10 is moving to a target cell of a given size are different. This might happen because in one case the user equipment 10 is approaching the cell of, for example, small size, while being at large distance from the serving radio base station and in the other case while being at short distance from the serving radio base station.

In order to ensure robust mobility performance in heterogeneous network, the information related to the 'type or category of base station' is not sufficient but one also, according to the present solution, need to know the cell sizes of the cells. This is because a particular base station type may serve different cell sizes depending upon the scenario. For instance a micro base station may be deployed to serve different sizes of cells. Similarly a macro base station may cover different cell sizes especially in the border region between urban and sub-urban or between rural and sub-urban areas. In release 9 of 3GPP TS 36.104, the radio base station requirements are specified for several radio base station classes namely for a general purpose radio base station based on macro network deployment, pico base station and home base station. This means that a radio base station covering different cell sizes can be developed based on these requirements. In summary from mobility standpoint, the acquisition of cell size, rather than the type alone, is of particular interest. In some deployment, depending upon the radio environment and the subscriber density, even with a sub-urban or a rural area, the macro cells may have different sizes.

Moreover there might be cases, wherein a given network deployment there are only macro cells with different sizes, e.g. large macro cells and small macro cells. Even in this case, there is a need to use different mobility triggers, when moving from a large macro cell to a large macro cell when compared to the case the user equipment 10 moves to a small macro cell.

In this description the terms "large cells" and "macro cells" are used interchangeably. The term "large cells" might imply large macro cells and the term "medium size cell" implies a small macro cell. In the same direction, the term "small size cell" and "femto/pico/micro cell" are used interchangeably in this disclosure.

Thus, the user equipment 10 may be able to detect its speed, Speed 1, and it should know the cell size of the serving cell 11 where it is located plus the cell size of the target cell. The cell size of the target cell might be available within the cell. In addition, the user equipment 10 should be aware of the cell size of the target cell. More specifically the adaptation of handover triggers depends upon the relation between the cell size of the serving cell and cell size of the neighbor cell, i.e. target cell, to be evaluated for handover or cell reselection. In particular prior art solutions do not disclose any methods which could allow user equipment to obtain the exact cell size information for neighbor cells.

An object of embodiments disclosed herein is to disclose methods assisting user equipments to obtain the cell size of the serving and neighboring cells. The disclosed methods are applicable both in idle and connected mode. Furthermore the disclosed methods are adapted to work with and without neighbor cell list. Without lack of generalization, it is assumed that the shape of cells is hexagonal and the distance of user equipments being located at cell borders to their serving radio base station is the same within a given cell independently from the location of the user equipments within this designated cell.

Once the acquisition of cell sizes is done, the user equipment speed may be made available at the user equipment 10 by using existing prior art technologies, and then the user equipment can make an evaluation of the mobility triggers to use. The user equipment speed can be measured by the base station eNB1 and signaled to the user equipment 10 or the user equipment 10 may itself measure the speed. Hence,

The advanced technologies such as E-UTRAN employ the concept of self organizing network (SON). The objective of the SON entity is to allow operators to automatically plan and tune the network parameters and configure the network nodes. The conventional method is based on manual tuning, which consumes enormous amount of time, resources and requires considerable involvement of work force. In particular due to the network complexity, large number of system parameters, Inter radio access technologies (IRAT) etc., it is very attractive to have reliable schemes and mechanisms which could automatically configure the network whenever necessary. This can be realized by SON, which can be visualized as a set of algorithms and protocols performing the task of automatic network tuning and configuration. The solution described herein is suitable for SON deployments.

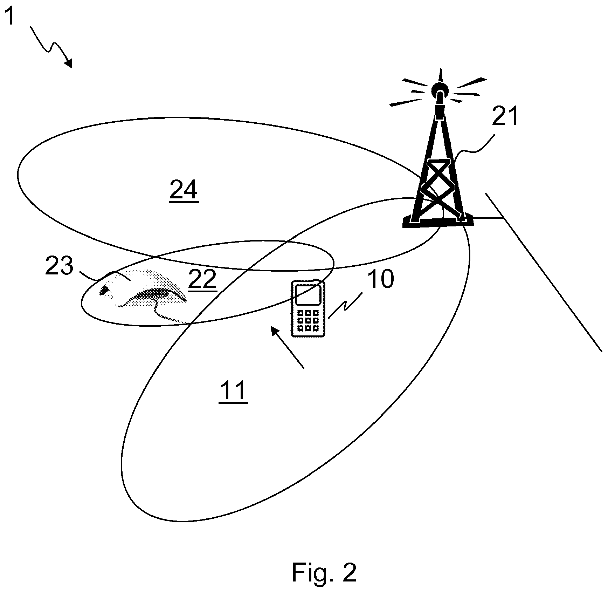

**Fig. 2** is a schematic overview depicting a radio communications network. The user equipment 10 is served in the first cell 11 of **a radio base station 21.** The user equipment 10 is moving towards an overlapping **second cell 22** of a different **radio base station 23,** for example, a home NodeB, but also towards a **third cell 24** of the radio base station 21. In order to improve the mobility performance of the user equipment 10, the user equipment 10 obtains a cell size of the first cell 11 and the cell sizes of the second and third cell 22,24. The cell sizes are to be used to determine which mobility trigger to use for performing a cell change. As stated above the mobility trigger is used to determine whether a cell change is to be performed. By basing the decision on obtained cell sizes the mobility performance is improved. In the following, two broad categories of mechanisms for enabling the user equipment 10 in obtaining or acquiring the cell size information of the serving cell 11 and one or more neighbor cells, such as the second and/or third cell 22,24, are disclosed:
- Acquisition of cell size information via signaling
- Determination of cell size information via pre-defined mapping table

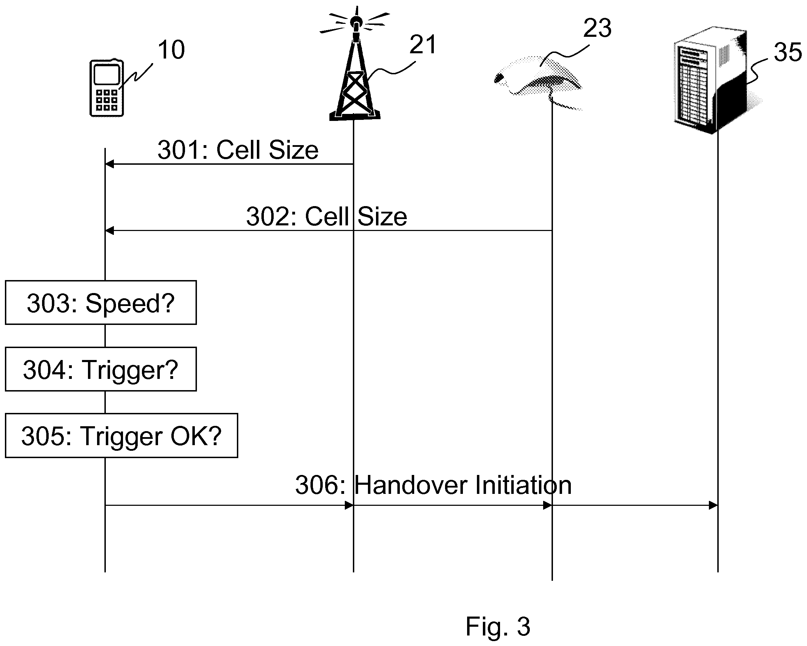

**Fig. 3** is a combined flowchart and signaling scheme exemplifying the obtaining of cell size information via signaling. The steps do not have to be taken in the order stated below, but may be taken in any suitable order

**Step 301:** The user equipment 10 receives a cell size of the first cell of the radio base station 21. The cell size is signaled from the radio base station 21.

**Step 302:** The user equipment 10 receives a cell size of the second cell of the second or different radio base station 23.

Following alternative signaling methods are exemplified to enable the user equipment 10 to obtain the cell size:

### -Obtaining cell size information via neighbor cell list

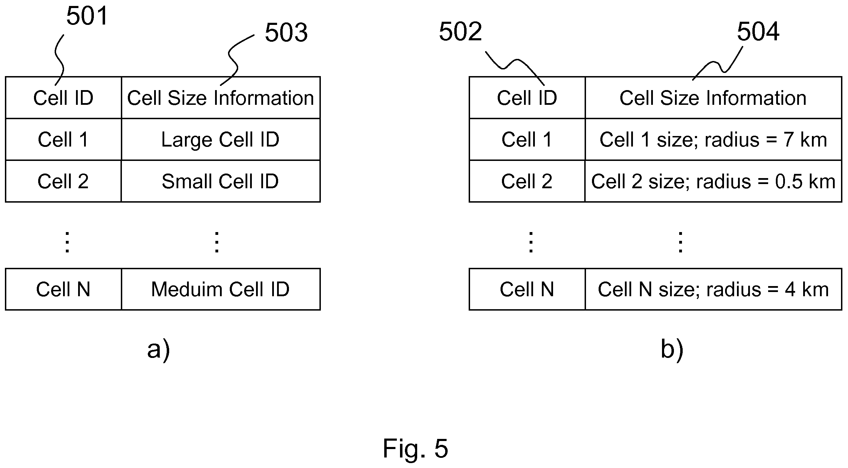

According to some embodiments obtaining cell size information pertaining to the serving and the neighbor cells is signaled in the neighbor cell list. This may be achieved by generating a list that comprises of neighbor cell identifiers (ID) and the corresponding cell size information, see below in Figs. 5a and 5b.

### -Obtaining cell size information via limited signaling without neighbor cell list

The neighbor cell list may not be used according to some technologies, such as E-UTRAN. Therefore, some embodiments enable user equipment 10 to obtain the neighbor cell size information without signaling the neighbor cell list. The serving cell signals two sets of information via broadcast and via user equipment specific channel to user equipment in idle mode and connected mode respectively. The first set of information is the identifier of the serving cell size. The second set of information is typically one bit flag. In this case the one bit information indicates whether the serving cell has the same cell size as that of the neighbor cells or not. This embodiment is useful for the coverage scenario comprising of two levels of cell sizes: small and large, or, for the case where macro cells are overlapping with pico/femto cells.

Yet in other embodiments the second set of information may comprise of multiple bits representing the identifier of the size of the neighbor cells. This is to account for multiple levels of cell sizes: small, medium, large etc.

Nonetheless in the embodiments the mapping between the cell sizes and their identifiers are pre-defined as expressed in Table 1 below. Furthermore, both embodiments address the scenario where typically most cells are of the similar size with an occasional occurrence of a cell of different size in a coverage area.

### -Obtaining cell size information via reading neighbor cell's common channel

In some embodiments each cell signals its cell size or cell size identifiers of the pre-defined cell sizes on a suitable common channel such as broadcast channel e.g. primary broadcast channel or a dedicated broadcast channel used in E-UTRAN. The user equipment 10 obtains the cell size information of each cell by reading its broadcast channel. This increases slight complexity in the user equipment since it has to partly read system information of at least K strongest neighbor cells in idle mode and in connected mode. The main significant advantage is that the user equipment 10 obtains precise information of the cell size within neighbor cells. Moreover, the increase in complexity is not significant, since K is typically equal to 2-3. Secondly no neighbor cell list is required to be signaled to the user equipment 10 so as this last one obtains the exact cell size information.

Yet in other embodiments each cell signals the said cell size information, preferably the cell size identifier, which has fewer overheads, on other possible common channels or signals such as synchronization signals or reference signals or combination thereof. The user equipment 10 obtains the neighbor cell size information during the synchronization procedure or during the neighbor cell measurement procedure. This method enables faster acquisition of the cell size information. Since the user equipment 10 has to perform neighbor cell synchronization and measurements therefore, this method does not lead to any significant additional processing at the user equipment 10. However, it requires that few extra bits are embedded in the synchronization and/or reference/pilot channels increasing the overheads. It should also be noted that reading other cells information, by listening to neighbor cells broadcast channel or reference signals, may be useful for other purposes, such as interference rejection or the like.

**Step 303.** The user equipment 10 may determine a travelling speed of the user equipment 10. If the speed is below a preset threshold value, for example, below 15 km/h, the user equipment 10 performs cell change according a preconfigured cell change scenario. However, if the speed is above the preset threshold value, for example, 20 km, the user equipment 10 may need to determine a mobility trigger to be used to determine whether a cell change is to be performed.

**Step 304.** The user equipment 10 determines which mobility trigger to use based on the obtained cell sizes.

**Step 305.** The user equipment 10 checks if the determined mobility trigger is fulfilled. For example, the user equipment 10 checks whether the signal strength of the third cell 23 is a preset amount stronger than signal strength of the first cell 11.

**Step 306.** That being the case, the user equipment 10 initiates handover process by sending signal strength measurements or the like to the radio base station 21 which may send a handover request to **a control network node 35,** such as a Mobility Management Entity (MME) or to neighbor radio base station.

Thus, the mobility performance of the user equipment is improved as the correct mobility trigger will be used.

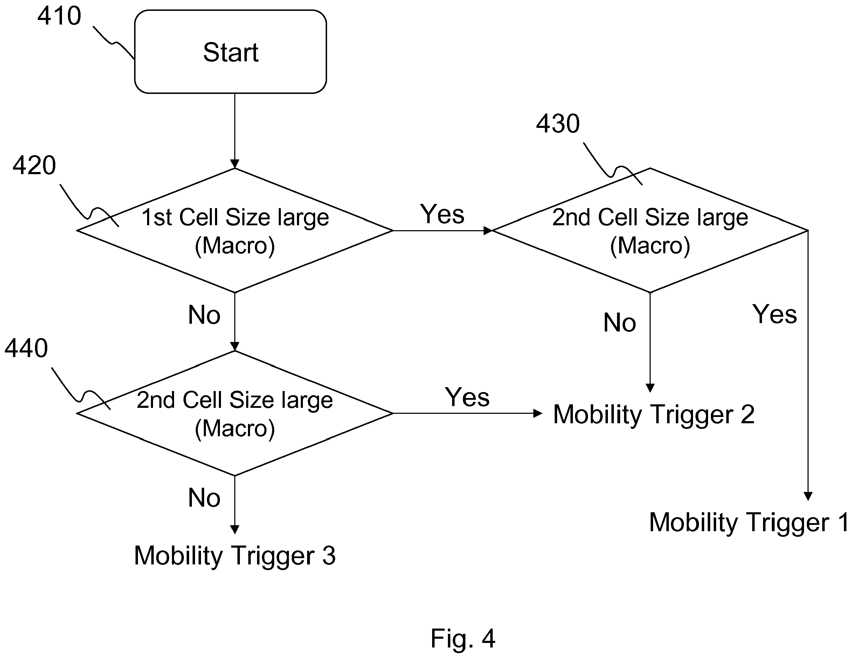

**Fig. 4** is a schematic block diagram depicting determination of mobility trigger to use in the user equipment 10. In this method, the first step can be avoided in the case the cell has a shape where all the locations at the cell borders imply the same distance to the serving radio base station. The steps do not have to be taken in the order stated below, but may be taken in any suitable order

The method in the user equipment 10 starts at **step 410.**

**Step 420.** The user equipment 10 determines whether the first cell 11 is a macro cell or not based on the obtained cell size of the first cell 11.

**Step 430.** If the first cell is a macro cell the user equipment 10 determines whether the second cell 23 is a macro cell or not based on the obtained cell size of the second cell 23. If the second cell 23 is a macro cell the mobility trigger to use is determined to be mobility trigger 1. However, if the second cell 23 is not a macro cell the mobility trigger to use is determined to be mobility trigger 2.

**Step 440.** If, on the other hand, the firs cell 11 is determined not to be a macro cell, the user equipment 10 also determines whether the second cell 23 is a macro cell or not based on the obtained cell size of the second cell 23. If the second cell 23 is a macro cell the mobility trigger to use is determined to be mobility trigger 2. However, if the second cell 23 is not a macro cell the mobility trigger to use is determined to be mobility trigger 3.

**Fig. 5a** and **Fig. 5b** are schematic overviews depicting neighbor cell lists indicating cell size information. In some embodiments the cell size information comprises of the identifier of a pre-defined cell sizes. Hence the signaled information maps the cell identifier to the cell size identifier of the pre-defined cell sizes in a neighbor cell lists where cell identifier is listed in **columns 501,502** and predefined cell sizes is mapped to the cell identifier in **columns 503,504.** The cell size may typically be expressed in terms of cell radius. But other metrics such as cell diameter or cell range can also be used. Furthermore other additional aspects such as cell topology e.g. hexagonal or rectangular etc may also be part of the cell size information. However cell size expressed in terms of cell radius is the simplest and most commonly used metric for defining the cell size. It also conveys adequate cell size related information in most deployment scenarios and network topologies.

An example of pre-defined cell sizes and their identifiers is also depicted in table 1. This type of pre-defined table may be specified in a standard. The E-UTRAN defines requirements for general purpose base station, which may belong to any base station class or type. These requirements are derived from the wide area base station class. Hence in E-UTRAN for all types of base stations two levels of cell sizes exist: small, cell radius < 3 km, and large, cell radius > 3 km, which are pre-defined E-UTRAN. In current E-UTRAN home base station class and the corresponding requirements have been introduced. Hence in E-UTRAN for wide area radio base station two levels of cell sizes exist: small, cell radius ≤ 3 km, and large, cell radius > 3 km. Similarly in E-UTRAN for the home base station two levels of cell sizes exist: small, cell radius ≤ 500 m, and large, cell radius > 500 m. This clearly demonstrates that the same radio base station type may serve cells of different sizes depending upon factors such as the deployment scenario, propagation condition, traffic and load etc. The present objective of the pre-defined cell size is to specify the radio base station frame synchronization requirements as a function of the cell size for different base station types. It should be noted that the radio base station type or radio base station class is a well known term. The radio base station classes or types are distinguished by factors such as minimum coupling loss, maximum output power, deployment scenario such as macro cell etc. In E-UTRAN three radio base station classes or types are specified: wide area radio base station, local area radio base station and home base station for primarily serving macro cell, pico cell and home environment respectively. In UTRAN four radio base station classes or types are specified: wide area radio base station, medium range radio base station, local area radio base station and home base station for primarily serving macro cell, micro cell, pico cell and home environment respectively. This criterion of separating user equipments between small and large cells might be adequate for certain deployments with relative large cells, typically outside big cities. The criterion however, might be modified, i.e. set to lower than 3 km values, in other deployments as done for the home base station. This modification is not expected to change the behavior and performance of the system in respect to the original function for which this signaling of cell size is created. Table 1 lists the cell sizes regardless of the type of radio base station used to serve the cells. Another possibility is that cell sizes are defined for each or for group of radio base station types. Example of this arrangement is shown in figures 2 and 3 representing cell sizes for all radio base stations type except home base station and for home base station respectively. From the mobility standpoint, the cell size rather than the radio base station type is of paramount significance. However if the cell sizes are defined for different radio base station types, as shown in figures 2 and 3, the network can signal the identifier of the radio base station type as well as the identifier of the corresponding cell size used.

**Table 1: Pre-defined cell sizes and their identifiers for any type of radio base station (example)**

| **No.** | **Cell size** | **Cell Radius: *R* (km)** | **Cell size identifier** | **Bits/signaling required to signal identifier** |
|---|---|---|---|---|
| 1 | Small | *R* ≤ 1 | 0 | 2 (00) |
| 2 | Medium | 1 < *R* ≤ 3 | 1 | 2 (01) |
| 3 | Large | *R* > 3 | 2 | 2 (10) |

**Table 2: Pre-defined cell sizes and their identifiers for all except home base station (example)**

| **No.** | **Cell size** | **Cell Radius: *R* (km)** | **Cell size identifier** | **Bits/signaling required to signal identifier** |
|---|---|---|---|---|
| 1 | Small | *R* ≤ 1 | 0 | 2 (00) |
| 2 | Medium | 1 < *R* ≤ 3 | 1 | 2 (01) |
| 3 | Large | *R > 3* | 2 | 2 (10) |

**Table 3: Pre-defined cell sizes and their identifiers for home base station (example)**

| **No.** | **Cell size** | **Cell Radius: *R* (m)** | **Cell size identifier** | **Bits/signaling required to signal identifier** |
|---|---|---|---|---|
| 1 | Small | *R* ≤ 500 | 0 | 1 (0) |
| 2 | Large | *R* > 500 | 1 | 1 (1) |

In another embodiment, see Fig. 5b, the cell size information comprises the actual cell size e.g. in the form of cell radius or any other suitable measure via neighbor cell list. Hence the signaled information maps the cell identifier to the actual cell size used in that cell.

The method described in reference to Fig. 5a, which comprises the signaling of the cell size identifier involves fewer signaling overheads e.g. only 2 bits for each cell in case there are up 3 or 4 pre-defined cell sizes.

On the other hand the method described in reference to Fig. 5b requires more overheads due to the signaling of the actual cell size. But the main advantage is that finer information related to the cell size can be signaled to the user equipment. In practical deployment cell sizes in a coverage area may have different sizes. In some cases the quantification of cell sizes into fewer pre-defined values may not be always possible. Regardless of the type of cell size information, the neighbor cell list containing the cell size information can be signaled on a broadcast channel for users in idle mode as well as on a shared or a user specific channel (e.g. shared data channel or a dedicated channel) for users in connected mode.

In traditional technologies such as cdma2000 technologies, single carrier radio transmission technology (1xRTT) and High Rate Packet Data (HRPD), UTRAN Frequency Division Duplexing (FDD), UTRAN Time Division Duplexing (TDD), Global System for Mobile Communications (GSM) etc the neighbor cell list which contains a number of the state of the art information e.g. neighbor cell identifier, neighbor cell antenna configuration etc, cell individual offset is usually signaled to the user equipment. Without the use of neighbor cell list the mobility performance in these legacy technologies could be seriously compromised. Hence, in these existing systems it is relatively convenient to incorporate an additional information element containing cell size information to the signaled neighbor cell list.

However in latest technologies such as E-UTRAN FDD and TDD, stringent enough E-UTRAN to E-UTRAN user equipment mobility requirements such as cell search are to be fulfilled by the user equipment 10 without any signaled neighbor cell list. Though, the use of neighbor cell list in E-UTRAN is not precluded but in practical E-UTRAN implementation there is no motivation to signal a neighbor cell list to the user equipment 10 for E-UTRAN to E-UTRAN mobility purposes. However, for I-RAT mobility such as between E-UTRAN and UTRAN or between E-UTRAN and GSM the signaling of neighbor cell list is required to achieve the desired mobility performance. Therefore the methods in this embodiment are also attractive for inter-RAT mobility in E-UTRAN system.

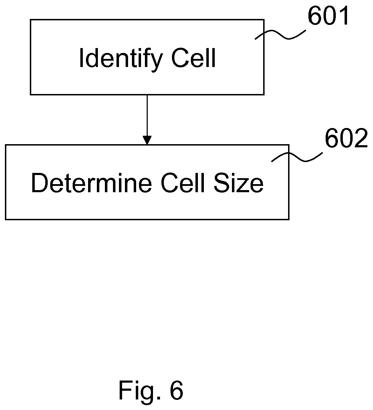

**Fig. 6** is a schematic flowchart of a method for determining cell size via predefined mapping tables. In these set of embodiments the user equipment 10 obtains the cell size information from a pre-defined mapping table. The mapping table can be predefined in a standard. This method is particularly aimed for the network or for the scenarios in which the signaling of neighbor cell list is not used for mobility measurements. In such scenarios the user equipment 10 may identify the neighbor cells by blind detection using state of the art methods. This means the user equipment 10 has to perform correlation over all possible physical layer cell identifiers and typically select a cell whose correlation output is strongest. For instance it can be used in E-UTRAN network for E-UTRAN to E-UTRAN mobility scenario, i.e. intra E-UTRAN mobility. Thus in E-UTRAN due to the absence of the neighbor cell list for neighbor cell measurements, the user equipment 10 performs correlation over all possible 504 physical cell identifiers in order to determine the N strongest neighbor cells. For E-UTRA intra-frequency the user equipment 10 is required to blindly identify 7 strongest neighbor cells provided their received quality, e.g. SNR, is at least -6 dB or higher.
There are following two main cases, which are further elaborated in the following sections:
- Single pre-defined mapping table
- Multiple pre-define mapping tables

Thus, embodiments in reference to Fig. 6 use a single pre-defined mapping table mapping the cell identifier and the cell size. Such a pre-defined table is illustrated by the example in table 4. Table 5 provides pre-defined mapping between the cell size identifier and the actual cell size assuming the cell sizes are applicable to any base station type. In case there are different cell sizes corresponding to the type of the base station or the group of base station types, then separate set of tables mapping the cell identifier and the cell size identifier can be pre-defined. In this case the network can signal the UE the predefined table to be used for determining the cell size of a neighbor cell. Another possibility is that for the determination of the cell size the UE uses the pre-defined table, which corresponds to the type of the serving base station.

**Table 4: Example: pre-defined table mapping cell identifier to cell size; 50% small and 50% large cells are assumed in this example**

| **No.** | **Cell identifier** | **Cell size identifier** | **Cell size: R** |
|---|---|---|---|
| 1 | 0 | 0 | Small cell; see table 3 |
| 2 | 1 | 1 | Large cell; see table 3 |
| 3 | 2 | 0 | |
| 4 | 3 | 1 | |
| 5 | 4 | 0 | |
| : | : | : | |
| *L* | *L*-1 | 1 | |

**Table 5: Pre-defined cell sizes and their identifiers; two levels of cell sizes are assumed in this example: small and large cells**

| **No.** | **Cell size** | **Cell Radius: *R* (km)** | **Cell size identifier** |
|---|---|---|---|
| 1 | Small | *R* ≤ 3 | 0 |
| 2 | Large | *R* > 3 | 1 |

In the example in table 5 two types of cells in terms of their sizes are assumed: small and large as this is the most common deployment scenario. The network can plan the cell identities according to the cell size. For example, for 50% small and 50% large cells used in the network or in the coverage area, the even numbered cell identifiers can be used for large cells whereas the odd numbered cell identifiers can be used to indicate the small cells. Though table 5 illustrates an example of a network comprising of two types of cell sizes but in order to account for finer granularity, more levels such as small size, medium size and large size cells could also be pre-defined.

In the example in table 4 it is assumed that half of the cells are small and the remaining ones are large. Alternatively different percentage of cell sizes can also be used. The user equipment 10 obtains the cell size information according to the following two step procedure:
- Identification of cell identifier
- Mapping of cell identifier to pre-defined cell size

**Step 601.** Firstly the user equipment 10 identifies, detects or searches a neighbor cell and determines its identifier, such as physical cell identifier or higher layer unique cell identifier, e.g. global cell identifier. In the absence of the neighbor cell list, the user equipment 10 may use blind detection to identify the neighbor cell or N strongest neighbor cells and thus obtains their cell identifiers. In state of the art technologies the user equipment 10 already determines the cell identifier of one or more neighbor cells during the synchronization procedure.

**Step 602.** Secondly the user equipment 10 uses a pre-defined table mapping the cell identifier to the cell size (or cell size identifier) to determine the cell size of the identified neighbor cell.

The user equipment 10 may utilize the above procedure to obtain the cell size information in idle as well as in connected mode.

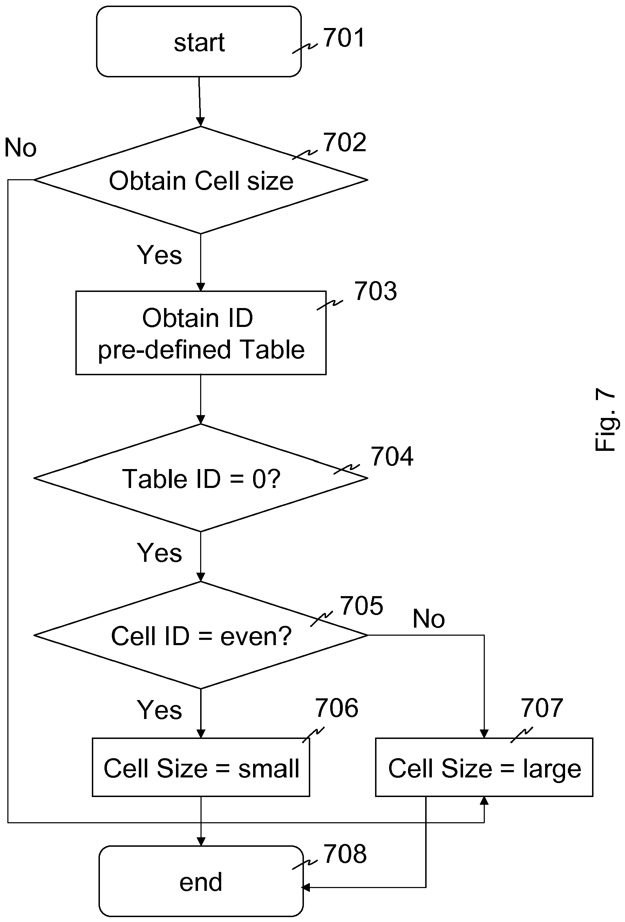

**Fig. 7** is a schematic flowchart of an alternative method for determining cell size via pre-defined mapping tables. Unlike the previous method described in reference to Fig. 6 in which only one pre-defined mapping table is used, the illustrated embodiment in Fig. 7 uses multiple mapping tables, which are pre-defined. Examples of such pre-defined tables are illustrated in tables 4-6 below. As described in the previous embodiment, table 3 is an example of mapping between the cell size identifier and the actual cell size.

**Step 701.** The method flow starts.

**Step 702.** The user equipment 10 determines whether to obtain cell size or not. For example, the cell deployment may only comprise large cells hence there is no need to obtain cell size as indicated by the arrow to step 708.

**Step 703.** In the case that the user equipment 10 determines to obtain cell size, the user equipment 10 obtains a table identifier of a pre-defined table.

**Step 704.** The user equipment 10 determines from the table identifier (ID) the table to use. For example, table ID '0' indicates the table 4 below.

**Step 705.** The user equipment 10 identifies the cell from a cell identifier and maps the cell identifier to pre-defined cell size. For example, in table 4 the user equipment 10 determines whether the cell identifier is an even cell identifier or not.

**Step 706.** In the case the cell identifier is even, the user equipment 10 knows, from table 4, that the cell size is small.

**Step 707.** In the case the cell identifier is odd, the user equipment 10 knows, from table 4, that the cell size is large.

**Step 708.** The method flow is ended.

Thus compared to the previous embodiment, in this embodiment the user equipment 10 needs to first obtain the identifier of the pre-defined table to be applied. This information can be signaled to the user equipment by the serving cell in idle and in connected modes over a common channel (e.g. broadcast channel) and shared or user equipment specific channel (e.g. dedicated channel or shared data channel).

The signaled pre-defined mapping table identifier can be different for different carrier frequencies used in the same coverage area. This serves the scenario in which multiple carrier frequencies with different percentage of cell sizes are used in the same coverage area. Furthermore one of the pre-defined tables (mapping the cell identifier to cell size identifier) with more typical percentage of cell sizes could also be pre-defined as a default pre-defined table. For instance table 6 containing equal number of small and large cells could be regarded as the default pre-defined mapping table. Hence in case the pre-defined table identifier is not signaled the user equipment shall use the default predefined table e.g. table 6 in this example.

The examples in tables 6-8 represent three kinds of cell deployment scenarios. Table 6 represents the case that there are equal number of small cells and large cells in the network or in the coverage area. Table 7 represents the case that most of the cells are large while table 8 represents the case that most of the cells are small.

**Table 6: Example 1: pre-defined table mapping cell identifier to cell size; 50% small and 50% large cells are assumed in this example. It can also be default table.**

| **Table Identifier** | **No.** | **Cell identifier** | **Cell size identifier** | **Cell size: R** |
|---|---|---|---|---|
| | 1 | 0 | 0 | Small cell; see table 3 |
| | 2 | 1 | 1 | Large cell; see table 3 |
| 0 | 3 | 2 | 0 | |
| | 4 | 3 | 1 | |
| | 5 | 4 | 0 | |
| | : | : | : | |
| | *L* | *L*-1 | 1 | |

**Table 7: Example 2: pre-defined table mapping cell identifier to cell size; 20% small and 80% large cells are assumed in this example.**

| **Table Identifier** | **No.** | **Cell identifier** | **Cell size identifier** | **Cell size: R** |
|---|---|---|---|---|
| | 1 | 0 | 1 | Large cell; see table 3 |
| | 2 | 1 | 1 | |
| 1 | 3 | 2 | 1 | |
| | 4 | 3 | 0 | Small cell; see table 3 |
| | : | : | : | |
| | *L* | *L*-1 | 1 | |
| | | | | |

**Table 8: Example 3: pre-defined table mapping cell identifier to cell size; 80% small and 20% large cells are assumed in this example.**

| **Table Identifier** | **No.** | **Cell identifier** | **Cell size identifier** | **Cell size: R** |
|---|---|---|---|---|
| | 1 | 0 | 0 | Small cell; see table 3 |
| | 2 | 1 | 0 | |
| 2 | 3 | 2 | 0 | |
| | 4 | 3 | 1 | Large cell; see table 3 |
| | : | : | : | |
| | *L* | *L*-1 | 0 | |
| | | | | |

Though multiple mapping tables are pre-defined only one mapping table is used in a given coverage area for one carrier frequency. Therefore the user equipment 10 needs to be informed by the serving cell about the pre-defined mapping table to be used for deriving the cell size in the coverage area for a given carrier frequency.

The use of multiple pre-defined mapping tables allows flexibility in terms of cell planning. Secondly multiple tables cater for the scenarios of having coverage areas with different percentage of cell sizes. Furthermore even different frequency carriers may be deployed to serve different sizes of cells. For instance one E-UTRA carrier frequency (F1) may be predominantly used for serving macro or large cells, e.g. 80%, and few micro or smaller cells, e.g. 20%. In this case the pre-defined table shown in example in table 7 can be applied. Similarly another E-UTRA carrier frequency (F2) may be predominantly used for serving micro or small cells, e.g. 80%, and few macro or larger cells, e.g. 20%. In this case the pre-defined table shown in example in table 8 can be applied.

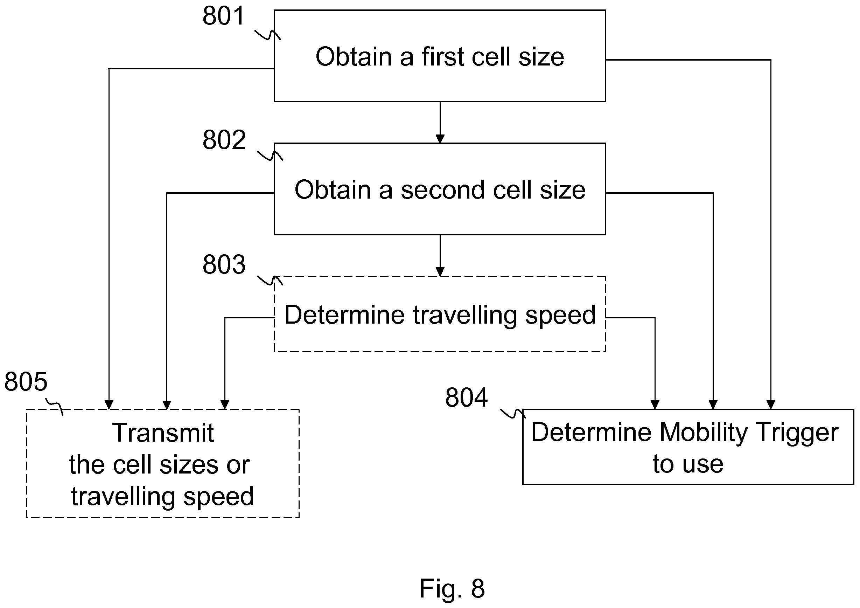

The method steps in the user equipment, referred to as user equipment 10 the figures, for enabling a cell change of a connection of the user equipment 10 from a first cell 11 to a second cell 22,24 in a radio communications network 1 according to some embodiments will now be described with reference to a flowchart depicted in **Fig. 8****.** The user equipment 10 is served by the first cell 11. The steps do not have to be taken in the order stated below, but may be taken in any suitable order.

**Step 801.** The user equipment 10 obtains a first cell size of the first cell 11.

**Step 802.** The user equipment 10 obtains a second cell size of the second cell 22,24.

In some embodiments, the first cell size and/or the second cell size is obtained by receiving an indication from a radio access network node 21,23, which indication indicates explicitly or implicitly the first cell size and/or the second cell size.

In some embodiments, the indication indicates explicitly the first cell size and/or the second cell size, wherein the indication comprises a cell size identifier, a cell range, a cell radius/diameter, or an indication whether same/different size than the first cell size. The indication may further comprise an identifier of the radio base station class or type serving the first cell and/or the second cell. The indication may furthermore be comprised in a neighbour cell list received from the radio access network node 21 serving the first cell 11.

In some embodiments, the indication is received over a broadcast channel from the radio access network node 21,23 serving the second cell 22,24.

In some embodiments, the first cell size and/or the second cell size may be obtained from a pre-defined table, which pre-defined table is arranged to map a cell identity to a cell size, and the step of obtaining a cell size comprises identifying a cell identity of the cell and mapping the cell identity to the cell size in the pre-defined table.

Furthermore, the user equipment 10 may comprise a plurality of predefined tables and the user equipment 10 also receives a second indication from the radio access network node 21,23, which second indicator indicates the predefined table to use.

**Step 803.** This is an optional step as indicated by the dashed line. The user equipment 10 may determine a travelling speed of the user equipment 10, which travelling speed and cell sizes are to be used to determine the mobility trigger to use.

**Step 804.** The user equipment 10 determines a mobility trigger to use based on at least the first cell size and/or the second cell size, which mobility trigger is used to determine whether a cell change is to be performed. In some embodiments, as stated above, the mobility trigger to use is determined based also on the travelling speed.

**Step 805.** This is an optional step as indicated by the dashed line. The user equipment 10 may also transmit the first cell size and/or second cell size to the radio access network node 21 serving the first cell 11. These cell sizes may then be used by the radio access network node 21 or another control node for network planning as described herein.

In some embodiments the cell change may correspond to a handover of the connection when the user equipment 10 is in connected mode or a cell reselection of the connection when the user equipment 10 is in idle mode.

The user equipment 10 may, as stated above, obtain the cell size of the neighbor cells by reading neighbor cells' common channels. These cell sizes may in turn be used for network planning. In some embodiments the user equipment 10 may be configured to report the obtained cell size information of the neighbor cells to the serving cell. Either all or sub-set of the users or users with special feature or capability could be requested to report this obtained information to the serving cell. The reported neighbor cell size information assists a cell to obtain an updated list of the cell size of all its closest neighbors. Furthermore, once a cell has obtained the updated cell size information of its closed neighbor cells, it may not request the user equipment to obtain and report the cell size information of the neighbor cells anymore.

The cell size information is static or changes very slowly. For instance this can typically occur at the time of network planning or when new base stations are deployed or when the existing base stations are removed or replaced by the new ones or by the new technology. The changes are generally more rapid during the initial network deployment phase. Thus in another embodiment one or more user equipments can be configured to report the neighbor cell size information when a new cell is added in the network. In this way each cell can automatically obtain the said cell size information of a new neighbor without any manual intervention.

The reported neighbor cell size information can be used by a cell for various purposes such as for generating signaled parameters described in earlier embodiments, e.g. signaling of 1 bit flag. This can also be used to set appropriate mobility related parameters in the cell. For instance if the size of the cell is the same as that its closest neighbor cells then one set of mobility related parameters are used. Otherwise another set of mobility related parameters can be used in a cell. Yet the choice for the mobility parameters to be used in a cell can be dependent upon whether the size of the closest or the size of most of the closest neighbor cells is larger than or smaller than that of the serving cell. The mobility parameters may comprise of one or more of the following: signal hysteresis, time hysteresis, measurement period, higher layer time domain filter time constant, higher layer filter coefficient, measurement bandwidth etc. The main advantage of this reporting method is that it prevents the need for performing network planning by manual means. This method can thus be regarded as part of self organized network (SON).

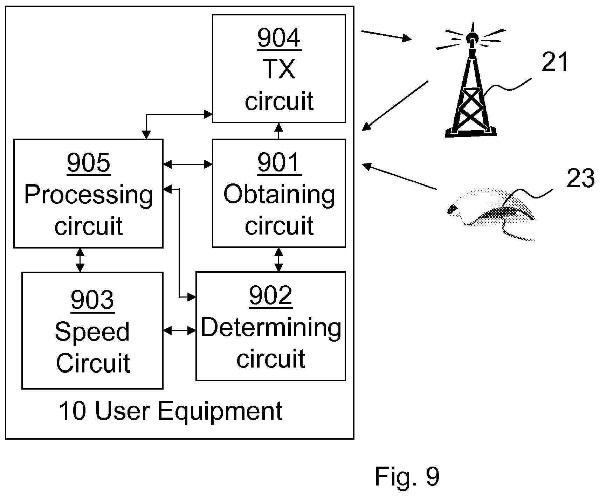

In order to perform the steps above a user equipment 10 is provided. **FIG. 9** is a schematic block diagram depicting the user equipment 10. The user equipment 10 is arranged to perform the cell change of the connection of the user equipment 10 from a first cell 11 to a second cell 22,24 in a radio communications network 1. The user equipment 10 is arranged to be served by the first cell 11. The user equipment 10 comprises **an obtaining circuit 901** configured to obtain a first cell size of the first cell 11. The obtaining circuit 901 is further arranged to obtain a second cell size of the second cell 22,24. The user equipment 10 further comprises **a determining circuit 902** coupled to the obtaining circuit 901 and configured to determine the mobility trigger to use based on at least the first cell size and/or the second cell size. The mobility trigger is used to determine whether a cell change is to be performed.

The user equipment 10 may also comprise **a speed circuit 903** coupled to the determining circuit 902 and configured to determine a travelling speed of the user equipment 10. For example, the speed circuit may be configured to determine a time the user equipment 10 travels a distance between two geographical coordinates. The determining circuit 902 may then be configured to use the travelling speed and cell sizes to determine the mobility trigger to use.

As stated above the cell change may correspond to a handover of the connection when the user equipment 10 is in connected mode or a cell reselection of the connection when the user equipment 10 is in idle mode.

Furthermore, the obtaining circuit 901 may be arranged to receive an indication from the radio access network node 21,23, which indication indicates explicitly or implicitly the first cell size and/or the second cell size. The indication may, for example, indicate explicitly the first cell size and/or the second cell size, wherein the indication comprises a cell size identifier, a cell range, a cell radius/diameter, or an indication whether same/different size than the first cell size. The obtaining circuit 901 may further be configured to receive the indication over a broadcast channel from the radio access network node 21,23 serving the second cell 22,24.

The indication may further comprise an identifier of the radio base station class or type serving the first cell and/or the second cell. Additionally, the indication may be comprised in a neighbour cell list received from the radio access network node 21 serving the first cell 11.

The obtaining circuit 901 may further be configured to obtain the first cell size and/or the second cell size is obtained from a pre-defined table, which pre-defined table is arranged to map a cell identity to a cell size. The obtaining circuit 901 is then configured to identify a cell identity of the cell and mapping the cell identity to the cell size in the predefined table.

In some embodiments, the user equipment 10 is arranged to comprise a plurality of predefined tables and the user equipment 10 also receives a second indication from the radio access network node 21,23. The second indicator indicates the predefined table to use.

Also in some embodiments, the user equipment 10 comprises **a transmitting circuit 904** coupled to the determining circuit 902 and configured to transmit the first cell size and/or second cell size to the radio access network node 21 serving the first cell 11.

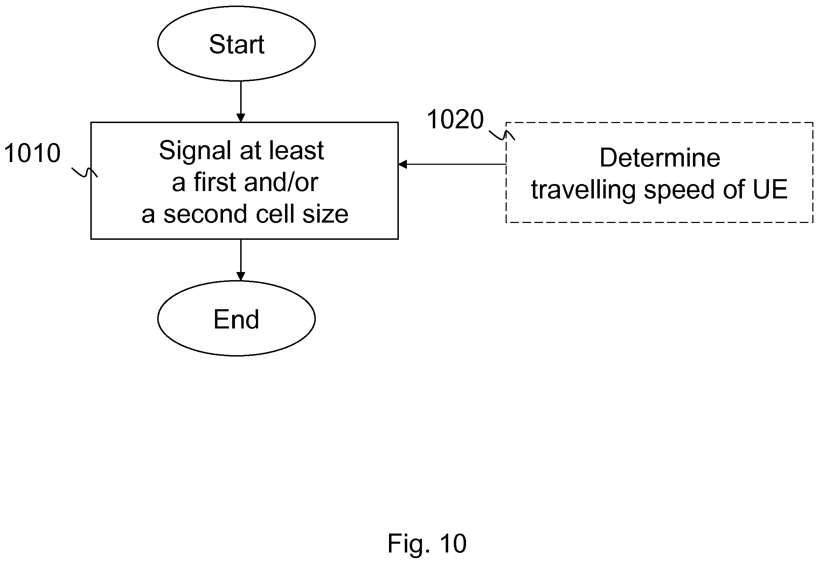

The method steps in the radio access network node, referred to as radio base station 21 in the figures for handling a cell change of a connection of the user equipment 10 served by the first cell 11 in the radio communications network 1 according to some embodiments will now be described with reference to a flowchart depicted in **Fig. 10****.** The cell change is from the first cell 11 to the second cell 22,24 in the radio communications network. The steps do not have to be taken in the order stated below, but may be taken in any suitable order.

**Step 1010.** The radio access network node 21 signals the indication of the first cell size of the first cell 11 and/or the second cell size of the second cell 22,24 to the user equipment 10. The cell sizes are to be used to determine the mobility trigger to use for performing cell change, and which mobility trigger is used to determine whether a cell change is to be performed.

The indication may indicate explicitly the first cell size and/or the second cell size. The indication may comprise a cell size identifier, a cell range, a cell radius/diameter, or an indication whether same/different size than the first cell size. The indication may comprise an identifier of the base station class or type serving the first cell and/or the second cell. In some embodiments, the indication is comprised in a neighbour cell list.

The radio access network node 21 may also signal a second indication indicating one of a plurality of predefined tables to use to the user equipment 10, wherein the user equipment 10 comprises the plurality of predefined tables. The predefined tables define cell size to cell identity.

**Step 1020.** This is an optional step as indicated by the dashed line. The radio access network node 21 determines a travelling speed of the user equipment 10. The travelling speed may then be signalled to the user equipment 10. The travelling speed and cell sizes are to be used to determine the mobility trigger to use.

In some embodiments the radio access network node is further arranged to receive cell sizes from the user equipment 10 to be used for network planning or the like.

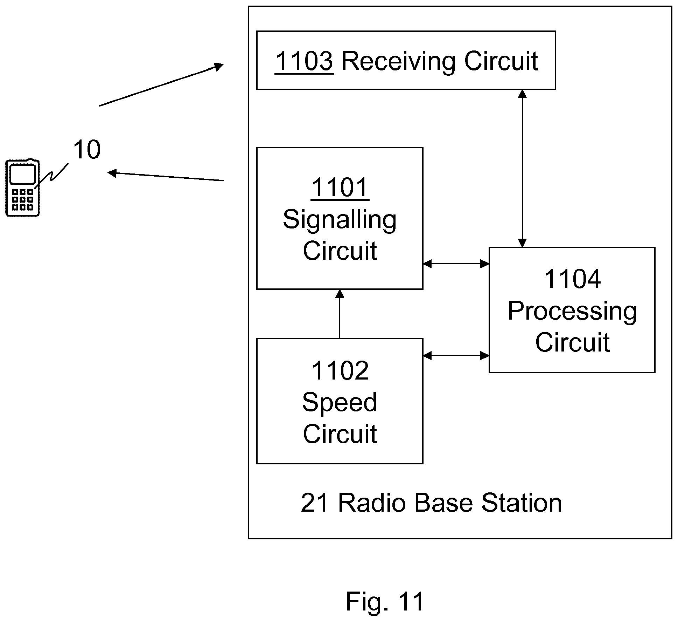

In order to perform the method steps a radio access network node 21 is provided. **FIG. 11** is a schematic block diagram depicting the radio access network node 21. The radio access network node is arranged to handle the cell change of the connection of the user equipment 10 served by the first cell 11 in the radio communications network 1. The cell change is from the first cell 11 to the second cell 22,24 in the radio communications network 1.

The radio access network node comprises **a signaling circuit 1101** configured to signal the indication of the first cell size of the first cell 11 and/or the second cell size of the second cell 22,24 to the user equipment 10. The cell sizes are to be used to determine a mobility trigger to use for performing cell change, and which mobility trigger is used to determine whether a cell change is to be performed.

As stated above, the indication may explicitly indicate the first cell size and/or the second cell size. For example, the indication may comprises a cell size identifier, a cell range, a cell radius/diameter, or an indication whether same/different size than the first cell size. In some embodiments, the indication may comprise an identifier of a base station class or type serving the first cell 11 and/or the second cell 22,24.

The indication may be comprised in a neighbour cell list.

The signaling circuit may further be configured to signal a second indication to the user equipment 10, which second indication indicates one of a plurality of predefined tables to use. The plurality of predefined tables is comprised in the user equipment 10 and defines cell size to cell identity. The radio access network node 21 may obtain the cell sizes during configuration, periodically when a node is added, and/or the like.

The radio access network node 21 may further comprise **a speed circuit 1102** coupled to the signaling circuit 1101 and configured to determine a travelling speed of the user equipment 10. The travelling speed may then be signaled by the signaling circuit 901 to the user equipment to be used together with the cell sizes to determine mobility trigger to use.

Furthermore, the radio access network node 21 may further comprise **a receiving circuit 1103** configured to receive reported cell sizes of the first and second cell from the user equipment 10. These may be used for network planning, signal to other user equipments or the like.

The radio access network node 21 is exemplified in the figures as a radio base station. However, it may in a different radio communications network be represented by a radio network controller node or the like.

The present mechanism for enabling a cell change of the connection of the user equipment 10 from a first cell 11 to the second cell 22,24 in the radio communications network 1, may be implemented through one or more processors, such as **a processing circuit 905** in the user equipment 10 depicted in Fig. 9 or such as **a processing circuit 1104** in the radio access network node 21 depicted in Figure 11, together with computer program code for performing the functions of the present solution. The program code mentioned above may also be provided as a computer program product, for instance in the form of a data carrier carrying computer program code for performing the present solution when being loaded into the user equipment 10 or the radio access network node 21. One such carrier may be in the form of a CD ROM disc. It is however feasible with other data carriers such as a memory stick. The computer program code may furthermore be provided as pure program code on a server and downloaded to the user equipment 10 or the radio access network node 21.

Thus, as stated above, knowledge of size of both serving and target cell and their use in adapting the mobility related parameters leads to mobility performance improvements. Therefore, it is of particular interest to obtain information of the cell size for both serving and target cells in a way that not too much signaling overhead is generated. Here, the discussion focuses on the mobility triggers to be used by the user equipment so as to trigger the detection of a "handover event".

Embodiments herein may be used for adapting mobility triggers or for adapting the set of handover related parameters, i.e., use different mobility triggers for different cell sizes. The parameters may comprise of one or more of the following: signal hysteresis, time hysteresis, measurement period, higher layer time domain filter time constant, higher layer filter coefficient, measurement bandwidth etc. According to simulations, the adaptation according to the cell size can decrease mobility failures and improve the system and service performance, especially when the user equipment speed is high or the system load is high.

Similarly embodiments herein may also be used for adapting cell reselection triggers in idle mode or for adapting the set of cell reselection parameters. The parameters may comprise of one or more of the following: signal hysteresis, time hysteresis, measurement period, higher layer time domain filter time constant, higher layer filter coefficient, measurement bandwidth etc.

Embodiments may also be used as part of Self Organized Network (SON), e.g. serving cell is unaware of neighbor cell sizes. It can be specified in the standard that user equipment will report the cell size when a new BS is added as part of SON function. This enables each cell to automatically obtain the information of the cell size of all its closest neighbor cells without any manual task. Each cell can then set appropriate mobility related parameters, which are suitable in given scenario.

Embodiments herein is perfectly applicable to heterogeneous networks where the cells of various sizes exist in the same deployment area and where the wrong setting of mobility triggers is more crucial than in the case of uniform hexagonal deployments.

Some embodiments herein result into lower amount of signaling than other possible solutions, e.g. compared to the case where the network signals the handover triggers to be used upon each handover occasion. The reason for signaling the most appropriate handover triggers per case is that in order to have the optimized performance, there is a need that these last handover triggers are calculated on the basis of the speed and cell sizes of serving and target cell. Hence, it is very likely that the network, that is the radio base station, might need to transmit mobility triggers per user equipment and every time the user equipment performs handover. This is because the user equipment speed might change and the serving cell is also changing between consecutive handovers. In a typical uniform hexagonal deployment featuring cells of 288 m cell radius, a user equipment moving with the speed of 3 km/h, makes one handover roughly every 150 s. Considering that the RRC message measurement control containing this information is very likely going to contain around 200 bits, then for each user equipment moving at a pedestrian speed, the network should transmit roughly 1400 bits/sec. In an average loaded cell in a city, with 100 VoIP user equipments per cell, then signaling overhead to be transmitted by the network is 140 kbits/sec. In extreme cases, where the user equipment moves at much higher speed, then the number above can be easily multiplied by a factor of 10. Moreover, in heterogeneous networks with smaller cells, the frequency of handovers might be even higher. This means signaling load will increase significantly in case mobility triggers are signaled for each handover evaluation.

In addition, the network may be aware of the user equipment speed so as to transmit the appropriate handover settings. The radio base station may estimate the user equipment speed; however, this is typically done with less accuracy as in the user equipment side, since there are not always as many samples in uplink as in downlink. Especially in LTE the user equipment does not constantly transmits pilot symbols or data to the serving eNB.

Alternatively, the user equipment can signal its speed to the network. This implies additional signaling overhead. In addition, the risk of radio link failure is quite significant in those cases, since in handover scenario the user equipment is usually far from the serving eNB. Furthermore, in LTE the use of DRX in connected mode put additional constraints on the user equipment in determining its speed.
Another advantage of the ideas in the disclosure, which enables reduction in signaling, is that by using these tables, the major factors affecting mobility triggers are captured, especially in areas with heterogeneous network deployments. Of course, other factors have an impact, such as antenna configurations, antenna tilting, etc, but they are not expected to be very significant in neighbor homogeneous deployments. In heterogeneous deployments, these factors are not expected to be the determining ones when setting the appropriate mobility triggers.

In addition, embodiments herein result into the lower number of errors in setting mobility triggers, when compared to other solutions, e.g. the network signals the appropriate mobility triggers to user equipments. The reason is that according to the disclosure, the user equipment becomes aware of the cell sizes of the serving and target cells well before the instant handover evaluation e.g. before the event/measurement reporting. In addition, the user equipment can estimate constantly its speed by using the reference symbols constantly transmitted in DL. Hence, the user equipment is able to estimate its speed shortly before the mobility triggering instant, since the necessary information is already available at the user equipment side. As a result, errors are minimized.

In the case mobility triggers are transmitted by the network, as mentioned, it might be so that first the user equipment transmits its estimated speed to the network and subsequently the network transmits the mobility triggers to the user equipment. Hence, there is some non trivial time difference between the instants the user equipment has measured its speed initially and the instant the mobility triggering takes place. In the meantime, the user equipment speed might have changed. The time difference in suggested solutions in the disclosure is much shorter as explained above.

Another problem with the option of signaling mobility triggers from the network is that even if the speed estimation is done at the base station, still the time difference between the instant the mobility triggers are transmitted from the serving eNB to the user equipment until these signaled triggers are finally used by the user equipment can be quite significant. Hence, the user equipment speed might have changed in the meantime resulting in the use of mobility triggers, which may be inappropriate or invalid.. This is not an issue in the suggested herein method (i.e. in the disclosure).

Embodiments herein result in a lower base station complexity, when compared to the case where mobility triggers are signaled from the base station to user equipments. The reason is that the case, where mobility triggers are signaled from the base station to user equipments, firstly the network might have to measure the user equipment speed as well, as explained above. In addition, the network will be required to dynamically set appropriate triggers to ensure user equipment performs optimized HO. This will also require extra processing in the base station for each HO evaluation.

In the drawings and specification, there have been disclosed exemplary embodiments of the invention. However, many variations and modifications can be made to these embodiments without substantially departing from the principles of the present invention. Accordingly, although specific terms are employed, they are used in a generic and descriptive sense only and not for purposes of limitation, the scope of the invention being defined by the following claims.

## Claims

1. A method in a user equipment (10) for enabling a cell change of a connection of the user equipment (10) from a first cell (11) to a second cell (22,24) in a radio communications network (1), wherein the user equipment is provided with two or more mobility triggers, which user equipment (10) is served by the first cell (11), the method being **characterized by**
- *obtaining* (801) a first cell size of the first cell (11),
- *obtaining* (802) a second cell size of the second cell (22,24), and
- *determining* (804) which of the two or more mobility triggers to use based on at least the first cell size and/or the second cell size, wherein the determined mobility trigger is used to determine whether a cell change is to be performed.

2. A method according to claim 1, wherein method further comprises
- *determining* (803) a travelling speed of the user equipment (10), which travelling speed and cell sizes are to be used to determine the mobility trigger to use.

3. A method according to any of the claims 1-2, wherein the first cell size and/or the second cell size is obtained by receiving an indication from a radio access network node (21,23), which indication indicates explicitly or implicitly the first cell size and/or the second cell size.

4. A method according to claim 3, wherein the indication indicates explicitly the first cell size and/or the second cell size, wherein the indication comprises a cell size identifier, a cell range, a cell radius/diameter, or an indication whether same/different size than the first cell size.

5. A method according to any of claims 3-4, wherein the indication comprises an identifier of the radio base station class or type serving the first cell and/or the second cell.

6. A method according to any of the claims 1-3, wherein the first cell size and/or the second cell size is obtained from a pre-defined table, which pre-defined table is arranged to map a cell identity to a cell size, and the step of obtaining a cell size comprises identifying a cell identity of the cell and mapping the cell identity to the cell size in the pre-defined table.

7. A method according to claim 6, wherein the user equipment (10) comprises a plurality of predefined tables and the user equipment (10) also receives a second indication from the radio access network node (21,23), which second indicator indicates the predefined table to use.

8. A method in a radio access network node (21) for handling a cell change of a connection of a user equipment (10) served by a first cell (11) in a radio communications network (1), wherein the user equipment (10) is provided with two or more mobility triggers, which cell change is from the first cell (11) to a second cell (22,24) in the radio communications network (1), the method **characterized by**
- *signalling* (1010) an indication of a first cell size of the first cell (11) and/or a second cell size of the second cell (22, 24) to the user equipment (10), which cell sizes are to be used to determine by the user equipment which of the two or more mobility triggers to use for performing cell change, wherein the determined mobility trigger is used to determine whether a cell change is to be performed.

9. A method according to claim 8 wherein the indication comprises a cell size identifier, a cell range, a cell radius/diameter, or an indication whether same/different size than the first cell size.

10. A method according to any of the claims 8-9, wherein the indication comprises an identifier of a base station class or type serving the first cell and/or the second cell.

11. A method according to any of the claims 3-5 and 8-10, wherein the indication is comprised in a neighbour cell list.

12. A method according to claim 8, wherein the user equipment (10) comprises a plurality of predefined tables defining cell size to cell identity and the method further comprises
- signalling a second indication to the user equipment (10), which second indication indicates one of the predefined tables to use.

13. A method according to any of the claims 8-10, further comprising
- *determining* (1020) a travelling speed of the user equipment (10), which travelling speed is signalled to the user equipment and used together with the cell sizes to determine mobility trigger to use.

14. A User equipment (10) arranged to perform a cell change of a connection of the user equipment (10) from a first cell (11) to a second cell (22,24) in a radio communications network (1), which user equipment (10) is arranged to be served by the first cell (11), wherein the user equipment (10) is provided with two or more mobility triggers, said user equipment (10) **characterized in that** it comprises
an obtaining circuit (901) configured to obtain a first cell size of the first cell (11), which obtaining circuit (901) is further configured to obtain a second cell size of the second cell (22,24), and
a determining circuit (902) coupled to the obtaining circuit (901) and configured to determine which of the two or more mobility triggers to use based on at least the first cell size and/or the second cell size, wherein the determined mobility trigger is used to determine whether a cell change is to be performed.

15. A Radio Access Network node (21) arranged to handle a cell change of a connection of a user equipment (10) served by a first cell (11) in a radio communications network (1), wherein the user equipment (10) is provided with two or more mobility triggers, which cell change is from the first cell 11 to a second cell (22,24) in the radio communications network (1), **characterised in that** said node (21) comprises
a signaling circuit (1101) configured to signal an indication of a first cell size of the first cell (11) and/or a second cell size of the second cell (22, 24) to the user equipment (10), which cell sizes are to be used by the user equipment to determine which of the two or more mobility triggers to use for performing cell change, wherein the determined mobility trigger is used to determine whether a cell change is to be performed.

## Patentansprüche

1. Verfahren in einem Benutzergerät (10) zum Ermöglichen eines Zellenwechsels einer Verbindung des Benutzergeräts (10) von einer ersten Zelle (11) in eine zweite Zelle (22,24) in einem Funkkommunikationsnetzwerk (1), wobei das Benutzergerät mit zwei oder mehr Mobilitätsauslösern bereitgestellt wird, wobei das Benutzergerät (10) durch die erste Zelle (11) bedient wird, wobei das Verfahren **gekennzeichnet ist durch**
- *Erhalten* (801) einer ersten Zellengröße der ersten Zelle (11),
- *Erholten* (802) einer zweiten Zellengröße der zweiten Zelle (22,24), und
- *Bestimmen* (804), welcher der zwei oder mehr Mobilitätsauslöser zu benutzen ist, basierend auf zumindest der ersten Zellengröße und/oder der zweiten Zellengröße, wobei der bestimmte Mobilitätsauslöser benutzt wird, um zu bestimmen, ob ein Zellenwechsel durchgeführt werden soll.

2. Verfahren nach Anspruch 1, wobei das Verfahren weiter umfasst:
- *Bestimmen* (803) einer Bewegungsgeschwindigkeit des Benutzergeräts (10), wobei die Bewegungsgeschwindigkeit und Zellengrößen dazu benutzt werden, den zu benutzenden Mobilitätsauslöser zu bestimmen.

3. Verfahren nach einem der Ansprüche 1-2, wobei die erste Zellengröße und/oder die zweite Zellengröße durch ein Empfangen einer Angabe von einem Funkzugangsnetzwerkknoten (21,23) erhalten werden/wird, wobei die Angabe explizit oder implizit die erste Zellengröße und/oder die zweite Zellengröße angibt.

4. Verfahren nach Anspruch 3, wobei die Angabe die erste Zellengröße und/oder die zweite Zellengröße explizit angibt, wobei die Angabe umfasst: einen Zellengrößenidentifikator, eine Zellenreichweite, einen Zellenradius/-durchmesser oder eine Angabe, ob die Zellengröße gleich/unterschiedlich zur ersten Zellengröße ist.

5. Verfahren nach einem der Ansprüche 3-4, wobei die Angabe einen Identifikator bezüglich einer Klasse oder eines Typs der Funkbasisstation umfasst, die die erste Zelle und/oder die zweite Zelle bedient.

6. Verfahren nach einem der Ansprüche 1-3, wobei die erste Zellengröße und/oder die zweite Zellengröße aus einer vordefinierten Tabelle erhalten wird, wobei die vordefinierte Tabelle ausgestaltet ist, eine Zellenidentität auf eine Zellengröße abzubilden, und wobei der Schritt des Erhaltens einer Zellengröße ein Identifizieren einer Zellenidentität der Zelle und ein Abbilden der Zellenidentität auf die Zellengröße in der vordefinierten Tabelle umfasst.

7. Verfahren nach Anspruch 6, wobei das Benutzergerät (10) eine Mehrzahl an vordefinierten Tabelle umfasst und wobei das Benutzergerät (10) auch eine zweite Angabe von dem Funkzugangsnetzwerkknoten (21,23) empfängt, wobei die zweite Angabe angibt, welche vordefinierte Tabelle zu benutzen ist.

8. Verfahren in einem Funkzugangsnetzwerkknoten (21) zum Abwickeln eines Zellenwechsels einer Verbindung eines Benutzergeräts (10), das von einer ersten Zelle (11) in einem Funkkommunikationsnetzwerk (1) bedient wird, wobei das Benutzergerät (10) mit zwei oder mehr Mobilitätsauslösern bereitgestellt wird, wobei der Zellenwechsel von der ersten Zelle (11) in eine zweite Zelle (22,24) im Funkkommunikationsnetzwerk (1) stattfindet, wobei das Verfahren **gekennzeichnet ist durch**
- *Signalisieren* (1010) einer Angabe einer ersten Zellengröße der ersten Zelle (11) und/oder einer zweiten Zellengröße der zweiten Zelle (22, 24) dem Benutzergerät (10), wobei die Zellengrößen dazu benutzt werden sollen, **durch** das Benutzergerät zu bestimmen, welcher der zwei oder mehr Mobilitätsauslöser zu benutzen ist, um den Zellenwechsel durchzuführen, wobei der bestimmte Mobilitätsauslöser benutzt wird, um zu bestimmen, ob eine Zellenwechsel durchgeführt werden soll.

9. Verfahren nach Anspruch 8, wobei die Angabe umfasst: einen Zellengrößenidentifikator, eine Zellenreichweite, einen Zellenradius/-durchmesser oder eine Angabe, ob die Zellengröße gleich/unterschiedlich zur ersten Zellengröße ist.

10. Verfahren nach einem der Ansprüche 8-9, wobei die Angabe einen Identifikator bezüglich einer Klasse oder eines Typs einer Funkbasisstation umfasst, die die erste Zelle und/oder die zweite Zelle bedient.

11. Verfahren nach einem der Ansprüche 3-5 und 8-10, wobei die Angabe in einer Liste bezüglich Nachbarzellen beinhaltet ist.

12. Verfahren nach Anspruch 8, wobei das Benutzergerät (10) eine Mehrzahl von vordefinierten Tabellen umfasst, die die Zellengröße-zu-Zellenidentität definieren, und wobei das Verfahren weiter umfasst:
- Signalisieren einer zweiten Angabe an das Benutzergerät (10), wobei die zweite Angabe eine zu benutzende der vordefinierten Tabellen anzeigt.

13. Verfahren nach einem der Ansprüche 8-10, weiter umfassend:
- *Bestimmen* (1020) einer Bewegungsgeschwindigkeit des Benutzergeräts (10), wobei die Bewegungsgeschwindigkeit dem Benutzergerät signalisiert wird und zusammen mit den Zellengrößen benutzt wird, um den zu benutzenden Mobilitätsauslöser zu bestimmen.

14. Benutzergerät (10), ausgestaltet, um einen Zellenwechsel einer Verbindung des Benutzergeräts (10) von einer ersten Zelle (11) in eine zweite Zelle (22,24) in einem Funkkommunikationsnetzwerk (1) durchzuführen, wobei das Benutzergerät (10) ausgestaltet ist, von der ersten Zelle (11) bedient zu werden, wobei das Benutzergerät (10) mit zwei oder mehr Mobilitätsauslösern bereitgestellt wird, wobei das Benutzergerät (10) **dadurch gekennzeichnet ist, dass** es umfasst:
einen Erhaltensschaltkreis (901), der konfiguriert ist, eine erste Zellengröße der ersten Zelle (11) zu erhalten, wobei der Erhaltensschaltkreis (901) weiter konfiguriert ist, eine zweite Zellengröße der zweiten Zelle (22,24) zu erhalten, und
einen Bestimmungsschaltkreis (902), der an den Erhaltensschaltkreis (901) gekoppelt ist und konfiguriert ist, zu bestimmen, welcher der zwei oder mehr Mobilitätsauslöser zu benutzen ist, basierend auf zumindest der ersten Zellengröße und/oder der zweiten Zellengröße, wobei der bestimmte Mobilitätsauslöser benutzt wird, um zu bestimmen, ob ein Zellenwechsel durchgeführt werden soll.

15. Funkzugangsnetzwerkknoten (21), ausgestaltet, um einen Zellenwechsel einer Verbindung eines Benutzergeräts (10), das von einer ersten Zelle (11) in einem Funkkommunikationsnetzwerk (1) bedient wird, abzuwickeln, wobei das Benutzergerät (10) mit zwei oder mehr Mobilitätsauslösern bereitgestellt wird, wobei der Zellenwechsel von der ersten Zelle (11) in eine zweite Zelle (22,24) im Funkkommunikationsnetzwerk (1) stattfindet, **dadurch gekennzeichnet, dass** der Knoten (21) umfasst:
einen Signalisierungsschaltkreis (1101), der konfiguriert ist, um eine Angabe einer ersten Zellengröße der ersten Zelle (11) und/oder einer zweiten Zellengröße der zweiten Zelle (22, 24) dem Benutzergerät (10) zu signalisieren, wobei die Zellengrößen vom Benutzergerät benutzt werden sollen, um zu bestimmen, welcher der zwei oder mehr Mobilitätsauslöser zum Durchführen des Zellenwechsels zu benutzen ist, wobei der bestimmte Mobilitätsauslöser benutzt wird, um zu bestimmen, ob ein Zellenwechsel durchgeführt werden soll.

## Revendications

1. Procédé dans un équipement utilisateur (10) pour permettre un changement de cellule d'une connexion de l'équipement utilisateur (10) d'une première cellule (11) à une deuxième cellule (22, 24) dans un réseau de radiocommunications (1), dans lequel l'équipement utilisateur est muni de deux déclencheurs de mobilité ou plus, lequel équipement utilisateur (10) est desservi par la première cellule (11), le procédé étant **caractérisé par**
- l'obtention (801) d'une première taille de cellule de la première cellule (11),
- l'obtention (802) d'une deuxième taille de cellule de la deuxième cellule (22, 24) et
- la détermination (804) du déclencheur de mobilité à utiliser parmi les deux déclencheurs de mobilité ou plus sur la base d'au moins la première taille de cellule et/ou la deuxième taille de cellule, où le déclencheur de mobilité déterminé est utilisé pour déterminer si un changement de cellule doit être effectué.

2. Procédé selon la revendication 1, dans lequel le procédé comprend en outre
- la détermination (803) d'une vitesse de déplacement de l'équipement utilisateur (10), laquelle vitesse de déplacement et les tailles de cellules doivent être utilisées pour déterminer le déclencheur de mobilité à utiliser.

3. Procédé selon l'une des revendications 1 et 2, dans lequel la première taille de cellule et/ou la deuxième taille de cellule est/sont obtenue(s) en recevant une indication provenant d'un noeud de réseau d'accès radio (21, 23), laquelle indication indique explicitement ou implicitement la première taille de cellule et/ou la deuxième taille de cellule.

4. Procédé selon la revendication 3, dans lequel l'indication indique explicitement la première taille de cellule et/ou la deuxième taille de cellule, où l'indication comprend un identifiant de taille de cellule, une portée de cellule, un rayon/diamètre de cellule ou une indication permettant de savoir si la taille est identique/différente de la taille de première cellule.

5. Procédé selon l'une des revendications 3 et 4, dans lequel l'indication comprend un identifiant de la classe ou du type de station de base radio desservant la première cellule et/ou la deuxième cellule.

6. Procédé selon l'une des revendications 1 à 3, dans lequel la première taille de cellule et/ou la deuxième taille de cellule est/sont obtenue(s) à partir d'un tableau prédéfini, lequel tableau prédéfini est agencé pour mettre en correspondance une identité de cellule avec une taille de cellule, et l'étape d'obtention d'une taille de cellule comprend l'identification d'une identité de cellule de la cellule et la mise en correspondance de l'identité de cellule avec la taille de cellule dans le tableau prédéfini.

7. Procédé selon la revendication 6, dans lequel l'équipement utilisateur (10) comprend une pluralité de tableaux prédéfinis et l'équipement utilisateur (10) reçoit également une deuxième indication provenant du noeud de réseau d'accès radio (21, 23), lequel deuxième indicateur indique le tableau prédéfini à utiliser.

8. Procédé dans un noeud de réseau d'accès radio (21) pour gérer un changement de cellule d'une connexion d'un équipement utilisateur (10) desservi par une première cellule (11) dans un réseau de radiocommunications (1), dans lequel l'équipement utilisateur (10) est muni de deux déclencheurs de mobilité ou plus, lequel changement de cellule est de la première cellule (11) à une deuxième cellule (22, 24) dans le réseau de radiocommunications (1), le procédé étant **caractérisé par**
- la signalisation (1010) d'une indication d'une première taille de cellule de la première cellule (11) et/ou d'une deuxième taille de cellule de la deuxième cellule (22, 24) à l'équipement utilisateur (10), lesquelles tailles de cellules doivent être utilisées pour déterminer, par l'équipement utilisateur, le déclencheur de mobilité à utiliser parmi les deux déclencheurs de mobilité ou plus pour effectuer un changement de cellule, où le déclencheur de mobilité déterminé est utilisé pour déterminer si un changement de cellule doit être effectué.

9. Procédé selon la revendications 8, dans lequel l'indication comprend un identifiant de taille de cellule, une portée de cellule, un rayon/diamètre de cellule ou une indication permettant de savoir si la taille est identique/différente de la première taille de cellule.

10. Procédé selon l'une des revendications 8 et 9, dans lequel l'indication comprend un identifiant d'une classe ou d'un type de station de base desservant la première cellule et/ou la deuxième cellule.

11. Procédé selon l'une des revendications 3 à 5 et 8 à 10, dans lequel l'indication est comprise dans une liste de cellules voisines.

12. Procédé selon la revendication 8, dans lequel l'équipement utilisateur (10) comprend une pluralité de tableaux prédéfinis définissant une correspondance entre une taille de cellule et une identité de cellule et le procédé comprend en outre
- la signalisation d'une deuxième indication à l'équipement utilisateur (10), laquelle deuxième indication indique l'un des tableaux prédéfinis à utiliser.

13. Procédé selon l'une des revendications 8 à 10, comprenant en outre
la détermination (1020) d'une vitesse de déplacement de l'équipement utilisateur (10), laquelle vitesse de déplacement est signalée à l'équipement utilisateur et utilisée conjointement avec les tailles de cellules pour déterminer le déclencheur de mobilité à utiliser.

14. Équipement utilisateur (10) agencé pour effectuer un changement de cellule d'une connexion de l'équipement utilisateur (10) d'une première cellule (11) à une deuxième cellule (22, 24) dans un réseau de radiocommunications (1), lequel équipement utilisateur (10) est agencé pour être desservi par la première cellule (11), où l'équipement utilisateur (10) est muni de deux déclencheurs de mobilité ou plus, ledit équipement utilisateur (10) étant **caractérisé en ce qu'**il comprend
un circuit d'obtention (901) configuré pour obtenir une première taille de cellule de la première cellule (11), lequel circuit d'obtention (901) est en outre configuré pour obtenir une deuxième taille de cellule de la deuxième cellule (22, 24), et
un circuit de détermination (902) couplé au circuit d'obtention (901) et configuré pour déterminer le déclencheur de mobilité à utiliser parmi deux déclencheurs de mobilité ou plus sur la base d'au moins la première taille de cellule et/ou la deuxième taille de cellule, où le déclencheur de mobilité déterminé est utilisé pour déterminer si un changement de cellule doit être effectué.

15. Noeud de réseau d'accès radio (21) agencé pour gérer un changement de cellule d'une connexion d'un équipement utilisateur (10) desservi par une première cellule (11) dans un réseau de radiocommunications (1), dans lequel l'équipement utilisateur (10) est muni de deux déclencheurs de mobilité ou plus, lequel changement de cellule est de la première cellule 11 à une deuxième cellule (22, 24) dans le réseau de radiocommunications (1), **caractérisé en ce que** ledit noeud (21) comprend
un circuit de signalisation (1101) configuré pour signaler une indication d'une première taille de cellule de la première cellule (11) et/ou d'une deuxième taille de cellule de la deuxième cellule (22, 24) à l'équipement utilisateur (10), lesquelles tailles de cellules doivent être utilisées par l'équipement utilisateur pour déterminer le déclencheur de mobilité à utiliser parmi deux déclencheurs de mobilité ou plus pour effectuer un changement de cellule, où le déclencheur de mobilité déterminé est utilisé pour déterminer si un changement de cellule doit être effectué.
